(19) **Europäisches Patentamt European Patent Office Office européen des brevets**

(11) **EP 4 768 441 A1**

(12) **EUROPEAN PATENT APPLICATION**
published in accordance with Art. 153(4) EPC

(43) Date of publication:
01.07.2026 Bulletin 2026/27

(21) Application number: 25849211.5

(22) Date of filing: 31.07.2025

(51) International Patent Classification (IPC):
*C01G 51/04* (2025.01)      *C01G 51/06* (2006.01)
*C01G 51/00* (2025.01)      *H01M 4/525* (2010.01)
*H01M 4/131* (2010.01)      *H01M 10/052* (2010.01)

(52) Cooperative Patent Classification (CPC):
Y02E 60/10

(86) International application number:
PCT/CN2025/111924

(87) International publication number:
WO 2026/097955 (15.05.2026 Gazette 2026/20)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 08.11.2024 CN 202411587551

(71) Applicants:
• **Guangdong Brunp Recycling Technology Co., Ltd**
**Guangdong 528137 (CN)**
• **Hunan Brunp Recycling Technology Co., Ltd.**
**Changsha, Hunan 410600 (CN)**

(72) Inventors:
• LU, Xinghua
Foshan, Guangdong 528137 (CN)
• RUAN, Dingshan
Foshan, Guangdong 528137 (CN)
• LIU, Genghao
Foshan, Guangdong 528137 (CN)
• XU, Xueliu
Foshan, Guangdong 528137 (CN)
• ZHOU, Siyuan
Foshan, Guangdong 528137 (CN)
• LI, Changdong
Foshan, Guangdong 528137 (CN)

(74) Representative: **LifeTech IP**
**Spies & Behrndt Patentanwälte PartG mbB**
**Elsenheimerstraße 47a**
**80687 München (DE)**

(54) **COBALT(II,III) OXIDE AND PREPARATION METHOD THEREFOR, LITHIUM COBALT OXIDE, POSITIVE ELECTRODE SHEET, AND BATTERY**

(57) The present invention provides a tricobalt tetraoxide and a preparation method therefor, a lithium cobalt oxide, a cathode sheet and a battery, which relate to the technical field of lithium battery cathode materials. a Dv50, a grain size D(111) of crystal plane (111), and a BET specific surface area of the tricobalt tetraoxide satisfy the following relationship:

$$3.33 \ \text{g}^{-1} \leq \frac{BET \times 10^{-12}}{Dv50 \times D(111)} \times [lg(Dv50)]^3 \leq 6.90 \ \text{g}^{-1}$$

, wherein the Dv50 of the tricobalt tetraoxide is 3 $\mu$m-20 $\mu$m. The tricobalt tetraoxide is obtained by pre-sintering and calcining cobalt carbonate with a crystallinity of 30%-80% and a median particle size Dv50 of 3 $\mu$m-22 $\mu$m.

FIG. 1

**Description**

**CROSS-REFERENCE TO RELATED APPLICATIONS**

The present application is based on and claims the benefit of priority from Chinese patent application No. 2024115875512 filed on November 8, 2024, the entire contents of which are incorporated herein by reference.

**TECHNICAL FIELD**

The present invention relates to the field of lithium battery cathode materials, and in particular to a tricobalt tetraoxide and a preparation method therefor, a lithium cobalt oxide, a cathode sheet and a battery.

**BACKGROUND**

Lithium cobalt oxide cathode materials are widely used in the 3C field owing to their advantages of high energy density, good cycling and rate performances. The growing popularity of emerging electronic products such as drones, electric toys, and VR glasses, has further driven the market demand for consumer-grade lithium cobalt oxide.

Tricobalt tetraoxide is an important precursor material for the preparation of lithium cobalt oxide. Its physical characteristics such as morphology, structure, grain size, and particle size are largely inherited by the lithium cobalt oxide cathode materials and have a significant impact on their electrochemical performance. For example, the larger the specific surface area of the tricobalt tetraoxide, the more active sites there are when the tricobalt tetraoxide is sintered with a lithium source, the greater the sintering activity, and the higher the crystallinity of the obtained lithium cobalt oxide, which is beneficial for improving the specific capacity of the cathode materials. The specific surface area of the tricobalt tetraoxide is related to multiple factors, including particle size, grain size, porosity of secondary particles, etc. Generally, for the tricobalt tetraoxide, the smaller the particle size, the smaller the grain size, the larger the porosity, and the larger the specific surface area. However, excessively small particle size/grain size or excessively high porosity can compromise the mechanical strength of the particles, leading to cracking and pulverization during subsequent processing, which adversely affects the morphology and performance of the lithium cobalt oxide. Therefore, controlling the particle size, grain size, and specific surface area of the tricobalt tetraoxide within appropriate ranges is beneficial for manufacturing a lithium cobalt oxide precursor with both good sintering activity and mechanical properties, ensuring that the subsequently obtained lithium cobalt oxide possesses uniform morphology and excellent electrochemical performance.

In view of the above, the present invention is proposed.

**SUMMARY**

An objective of the present invention is to provide a tricobalt tetraoxide and a preparation method therefor, a lithium cobalt oxide, a cathode sheet and a battery, aiming to provide a tricobalt tetraoxide with high sintering activity and high mechanical strength, and a lithium cobalt oxide prepared by using the tricobalt tetraoxide as a precursor with a high specific capacity and initial charge-discharge efficiency.

The present invention is achieved as follows.

In a first aspect, the present invention provides a tricobalt tetraoxide having the following features: a Dv50, a grain size D(111) of crystal plane (111), and a BET specific surface area of the tricobalt tetraoxide satisfy the following

relationship: $3.33 \ \mathrm{g}^{-1} \leq \frac{BET \times 10^{-12}}{Dv50 \times D(111)} \times [lg(Dv50)]^3 \leq 6.90 \ \mathrm{g}^{-1}$ , wherein the Dv50 of the tricobalt

tetraoxide is 3 $\mu$m-20 $\mu$m, the Dv50 refers to a particle size corresponding to a cumulative particle size distribution based on volume statistics of 50%, the BET is in a unit of $m^2/g$, and the D(111) is in a unit of $\mu$m.

In some embodiments, the grain size D(111) of the crystal plane (111) of the tricobalt tetraoxide is 0.0450 $\mu$m-0.0510 $\mu$m or 0.0560 $\mu$m-0.0680 $\mu$m.

In some embodiments, the BET specific surface area of the tricobalt tetraoxide is 2 $m^2/g$-6.5 $m^2/g$.

In some embodiments, a particle size distribution coefficient Span of the tricobalt tetraoxide is less than 1, wherein Span = (Dv90 - Dv10) / Dv50, and the Dv10, Dv50, and Dv90 refer to particle sizes at which the cumulative particle size distribution based on volume statistics reaches 10%, 50% and 90%, respectively. In some other embodiments, the Span is 0.35-0.70.

In some embodiments, a Dv50 change rate $\Delta$D% of the tricobalt tetraoxide after being pressed at 7,500 N relative to that before being pressed is less than 2.0%. In some other embodiments, the $\Delta$D% is 0.58%-1.65%, wherein $\Delta$D% = (Dv50 - Dv50') / Dv50 $\times$ 100%, and the Dv50 and the Dv50' are the median particle sizes of the material particles before and after being pressed, respectively.

In some embodiments, the grain size D(111) of the crystal plane (111) of the tricobalt tetraoxide is 0.0450 $\mu$m-0.0510 $\mu$m, and the median particle size Dv50 of the tricobalt tetraoxide is 3 $\mu$m-6 $\mu$m.

In some embodiments, the grain size D(111) of the crystal plane (111) of the tricobalt tetraoxide is 0.0560 $\mu$m-0.0680 $\mu$m, and the median particle size Dv50 of the tricobalt tetraoxide is 16 $\mu$m-20 $\mu$m.

In a second aspect, the present invention provides a method for preparing the tricobalt tetraoxide, having the following features: pre-sintering and calcining cobalt carbonate with a crystallinity of 30%-80% and a median particle size Dv50 of 3 $\mu$m-22 $\mu$m to obtain the tricobalt tetraoxide.

In some embodiments, a method for preparing the cobalt carbonate is as follows: adding a cobalt salt solution and a precipitant solution into a reaction kettle containing a base liquid in parallel, starting stirring for reaction, stopping the adding and the stirring when a resulting material in the reaction kettle reaches an upper limit, standing a reaction product until the material settles, pumping away part of supernatant, repeating the above operations of adding, stirring, standing, and pumping away part of the supernatant until an obtained cobalt carbonate reaches a target particle size, conducting solid-liquid separation and then washing a resulting solid.

In some embodiments, the method for preparing the cobalt carbonate further comprises at least one of the following features:

feature 1: a cobalt salt in the cobalt salt solution is at least one of cobalt chloride, cobalt sulfate, and cobalt nitrate, and the cobalt salt solution has a concentration of 2.0 mol/L-2.5 mol/L;

feature 2: a precipitant in the precipitant solution is at least one of sodium carbonate, sodium bicarbonate, ammonium bicarbonate, and potassium carbonate, and the precipitant solution has a concentration of 1.0 mol/L-3.0 mol/L;

feature 3: the cobalt salt solution is added at a flow rate of 20 L/h-40 L/h, and the precipitant solution is added at a flow rate of 20 L/h-30 L/h;

feature 4: the base liquid is the precipitant solution;

feature 5: a speed of the stirring is 200 rpm-300 rpm, and a temperature for the reaction is 40°C-55°C;

feature 6: the pumping away part of the supernatant refers to pumping away the supernatant equivalent to half a chamber volume of the reaction kettle; and

feature 7: the target particle size refers to that the median particle size Dv50 of the cobalt carbonate is 3 $\mu$m-22 $\mu$m.

In some embodiments, the pre-sintering is performed using a flash dryer; the flash dryer has an air inlet temperature of 300°C-400°C, an air outlet temperature of 150°C-180°C, a main drive rotation speed of 20 Hz-30 Hz, and a feeding frequency of 10 Hz-20 Hz.

In some embodiments, the calcining is performed in a rotary kiln; the rotary kiln has a feeding frequency of 3 Hz-9 Hz, a furnace tube rotation frequency of 12 Hz-15 Hz, and a temperature of 710°C-760°C; the calcining is performed for 3 h-5 h.

In a third aspect, the present invention provides a lithium cobalt oxide, the lithium cobalt oxide is obtained by mixing and sintering the tricobalt tetraoxide obtained in any one of the above embodiments with a lithium source.

In a fourth aspect, the present invention provides a cathode sheet comprising the lithium cobalt oxide according to the third aspect.

In a fifth aspect, the present invention further provides a battery comprising the cathode sheet according to the fourth aspect.

The present invention has at least the following beneficial effects.

(1) The tricobalt tetraoxide provided by the present invention has high reaction activity with the lithium source and excellent mechanical properties, and the obtained lithium cobalt oxide shows a high lithium-ion diffusion rate, and thus has a high specific capacity and high initial charge-discharge efficiency.

(2) In the present invention, the cobalt carbonate with specific crystallinity and particle size is utilized to prepare the tricobalt tetraoxide, and the cobalt carbonate has both good sintering activity and mechanical strength. By pre-sintering and calcining the above cobalt carbonate, the finally obtained tricobalt tetraoxide has excellent dispersibility and high particle integrity.

## BRIEF DESCRIPTION OF DRAWINGS

In order to illustrate the technical schemes of the embodiments of the present invention more clearly, the drawings required for use in the embodiments will be briefly introduced hereafter.

FIG. 1 is an SEM image of the tricobalt tetraoxide prepared in Example 1;

FIG. 2 is an SEM image of the tricobalt tetraoxide prepared in Example 6;

FIG. 3 is an SEM image of the tricobalt tetraoxide prepared in Comparative Example 1;

FIG. 4 is an SEM image of the tricobalt tetraoxide prepared in Comparative Example 2;

FIG. 5 is an XRD pattern of the tricobalt tetraoxide prepared in Example 1;

FIG. 6 is an XRD pattern of the tricobalt tetraoxide prepared in Example 6;

FIG. 7 is an XRD pattern of the tricobalt tetraoxide prepared in Comparative Example 1; and

FIG. 8 is an XRD pattern of the tricobalt tetraoxide prepared in Comparative Example 2.

## DETAILED DESCRIPTION

In order to make the objectives, technical schemes and advantages of the embodiments of the present invention more clearly, the technical schemes of the embodiments of the present invention will be described clearly and completely below. If no specific conditions are specified in the embodiments, the embodiments will be carried out according to conventional conditions or the conditions recommended by the manufacturers. All of the used agents or instruments without specifying the manufacturers are commercially-available conventional products.

An embodiment of the present invention provides a tricobalt tetraoxide having the following features: a Dv50, a grain size D(111) of crystal plane (111), and a BET specific surface area of the tricobalt tetraoxide satisfy the following

relationship:    $3.33 \ \text{g}^{-1} \leq \dfrac{BET \times 10^{-12}}{Dv50 \times D(111)} \times [lg(Dv50)]^3 \leq 6.90 \ \text{g}^{-1}$ , wherein the Dv50 of the tricobalt

tetraoxide is 3 $\mu$m-20 $\mu$m, the Dv50 refers to a particle size corresponding to a cumulative particle size distribution based on volume statistics of 50%, the BET is in a unit of $m^2$/g, the D(111) is in a unit of $\mu$m, and $lg(Dv50)$ represents a logarithm of the Dv50 particle size value, which has no unit.

The crystal plane (111) of the tricobalt tetraoxide corresponds to a diffraction angle of $2\theta = 18°\text{-}20°$ in an XRD pattern.

The grain size D(111) of the crystal plane (111) of the tricobalt tetraoxide is obtained through X-ray diffraction (XRD) spectrum analysis, via calculating using the Scherrer formula by acquiring the diffraction angle and full width at half maximum (FWHM) corresponding to a diffraction peak of the crystal plane (111).

Tricobalt tetraoxide is an important precursor material for the preparation of lithium cobalt oxide. Its physical characteristics such as morphology, structure, grain size, and particle size are largely inherited by the lithium cobalt oxide cathode materials and have a significant impact on their electrochemical performance. For example, the larger the specific surface area of the tricobalt tetraoxide, the more active sites there are when the tricobalt tetraoxide is sintered with a lithium source, the greater the sintering activity, and the higher the crystallinity of the obtained lithium cobalt oxide, which is beneficial for improving the specific capacity of the cathode materials. The specific surface area of the tricobalt tetraoxide is related to multiple factors, including particle size, grain size, porosity of secondary particles, etc. Generally, for the tricobalt tetraoxide, the smaller the particle size, the smaller the grain size, the larger the porosity, and the larger the specific surface area. However, excessively small particle size/grain size or excessively high porosity can compromise the mechanical strength of the particles, leading to cracking and pulverization during subsequent processing, which adversely affects the morphology and performance of the lithium cobalt oxide. Therefore, controlling the particle size, grain size, and specific surface area of the tricobalt tetraoxide within appropriate ranges is beneficial for manufacturing a lithium cobalt oxide precursor with both good sintering activity and mechanical properties, ensuring that the subsequently obtained lithium cobalt oxide possesses uniform morphology and excellent electrochemical performance.

The tricobalt tetraoxide material provided by the embodiments of the present invention that satisfies the above value range, has both good sintering activity and mechanical strength, and the subsequently obtained lithium cobalt oxide has good lithium-ion diffusion efficiency.

In some embodiments of the present disclosure, the grain size D(111) of the crystal plane (111) of the tricobalt tetraoxide is 0.0450 μm-0.0510 μm or 0.0560 μm-0.0680 μm.

In some embodiments of the present invention, the BET specific surface area of the tricobalt tetraoxide is 2 m²/g-6.5 m²/g.

In some embodiments of the present invention, a particle size distribution coefficient Span of the tricobalt tetraoxide is less than 1, wherein Span = (Dv90 - Dv10) / Dv50, and the Dv10, Dv50, and Dv90 refer to particle sizes at which the cumulative particle size distribution based on volume statistics reaches 10%, 50% and 90%, respectively. In some other embodiments of the present invention, the Span is 0.35-0.70.

The particle size distribution coefficient Span reflects the uniformity of the particle sizes of the tricobalt tetraoxide particles. The tricobalt tetraoxide provided by the embodiments of the present invention exhibiting a low Span indicates a low degree of agglomeration. The low degree of agglomeration facilitates mixing and sintering of the tricobalt tetraoxide with the lithium source, and the obtained lithium cobalt oxide has a more uniform particle size distribution and a higher crystal phase purity, which in turn leads to improved electrochemical performance of the lithium cobalt oxide.

In some embodiments of the present invention, a Dv50 change rate ΔD% of the tricobalt tetraoxide after being pressed at 7,500 N relative to that before being pressed is less than 2.0%. In some other embodiments of the present invention, the ΔD% is 0.58%-1.65%; wherein ΔD% = (Dv50 - Dv50') / Dv50 × 100%, and the Dv50 and the Dv50' are the median particle sizes of the material particles before and after being pressed, respectively.

The Dv50 change rate ΔD% can be used for evaluating compressive strength of the tricobalt tetraoxide. Specifically, the higher the compressive strength of the tricobalt tetraoxide, the smaller the ΔD%, and the subsequent mixing and sintering with the lithium source are less likely to experience particle crushing and powder loss.

In some embodiments of the present invention, the grain size D(111) of the crystal plane (111) of the tricobalt tetraoxide is 0.0450 μm-0.0510 μm, and the median particle size Dv50 of the tricobalt tetraoxide is 3 μm-6 μm.

In some embodiments of the present invention, the grain size D(111) of the crystal plane (111) of the tricobalt tetraoxide is 0.0560 μm-0.0680 μm, and the median particle size Dv50 of the tricobalt tetraoxide is 12 μm-20 μm.

In a second aspect, an embodiment of the present invention provides a method for preparing tricobalt tetraoxide, which has the following features:

pre-sintering and calcining cobalt carbonate with a crystallinity of 30%-80% and a median particle size Dv50 of 3 μm-22 μm to obtain the tricobalt tetraoxide.

In the embodiments of the present invention, the cobalt carbonate with specific crystallinity and particle size is used for preparing the tricobalt tetraoxide, so that the cobalt carbonate has both high sintering activity and good mechanical strength, which can prevent the particles from losing powder from the surface and being damaged during deagglomeration of flash drying. Additionally, the cobalt carbonate with specific crystallinity and particle size can be presintered and calcined to obtain the tricobalt tetraoxide satisfying the relationship of

$$3.33 \ \text{g}^{-1} \leq \frac{BET \times 10^{-12}}{Dv50 \times D(111)} \times [lg(Dv50)]^3 \leq 6.90 \ \text{g}^{-1}.$$

In some embodiments of the present invention, pre-sintering and calcining the cobalt carbonate with a crystallinity of 50%-80% and a median particle size Dv50 of 3 μm-7 μm to obtain a tricobalt tetraoxide with a grain size D(111) of crystal plane (111) of 0.0450 μm-0.0510 μm and a median particle size Dv50 of 3 μm-6 μm.

In some embodiments of the present invention, pre-sintering and calcining the cobalt carbonate with a crystallinity of 30%-65% and a median particle size Dv50 of 13 μm-22 μm to obtain a tricobalt tetraoxide with a grain size D(111) of crystal plane (111) of 0.0560 μm-0.0680 μm and a median particle size Dv50 of 12 μm-20 μm.

In some embodiments of the present invention, the method for preparing the cobalt carbonate is as follows: adding a cobalt salt solution and a precipitant solution into a reaction kettle containing a base liquid in parallel, starting stirring for reaction, stopping the adding and the stirring when a resulting material in the reaction kettle reaches an upper limit, standing a reaction product until the material settles, pumping away part of supernatant, repeating the above operations of adding, stirring, standing, and pumping away part of the supernatant until an obtained cobalt carbonate reaches a target particle size, conducting solid-liquid separation and then washing a resulting solid.

In some embodiments of the present invention, the method for preparing the cobalt carbonate further comprises at least one of the following features:

feature 1: a cobalt salt in the cobalt salt solution is at least one of cobalt chloride, cobalt sulfate, and cobalt nitrate, and the cobalt salt solution has a concentration of 2.0 mol/L-2.5 mol/L;

feature 2: a precipitant in the precipitant solution is at least one of sodium carbonate, sodium bicarbonate, ammonium bicarbonate, and potassium carbonate, and the precipitant solution has a concentration of 1.0 mol/L-3.0 mol/L;

feature 3: the cobalt salt solution is added at a flow rate of 20 L/h-40 L/h, and the precipitant solution is added at a flow rate of 20 L/h-30 L/h;

feature 4: the base liquid is the precipitant solution;

feature 5: a speed of the stirring is 200 rpm-300 rpm, and a temperature for the reaction is 40°C-55°C;

feature 6: the pumping away part of the supernatant refers to pumping away the supernatant equivalent to half a chamber volume of the reaction kettle; and

feature 7: the target particle size refers to that the median particle size Dv50 of the cobalt carbonate is 3 $\mu$m-22 $\mu$m.

The embodiments of the present invention can obtain the cobalt carbonate with specific crystallinity and particle size by adjusting the preparation process of the cobalt carbonate.

In some embodiments of the present invention, the pre-sintering is performed using a flash dryer; the flash dryer has an air inlet temperature of 300°C-400°C, an air outlet temperature of 150°C-180°C, a main drive rotation speed of 20 Hz-30 Hz, and a feeding frequency of 10 Hz-20 Hz.

In some embodiments of the present invention, feeding a washed cobalt carbonate into the flash dryer for drying and pre-sintering. The particles shrink instantly under high heat, which reduces interface among the agglomerated particles. At the same time, stirring blades of the main drive of the flash dryer further disrupt the interface among the agglomerated particles to achieve deagglomeration, so that the particles are individually dispersed, improving particle uniformity.

In some embodiments of the present invention, the calcining is performed in a rotary kiln with a feeding frequency of 3 Hz-9 Hz, a furnace tube rotation frequency of 12 Hz-15 Hz, a calcining duration of 3 h-5 h, and a calcining temperature of 710°C-760°C.

In the embodiments of the present invention, the grain size corresponding to the crystal plane (111) of the tricobalt tetraoxide is controlled to be within an appropriate range by controlling the calcining temperature and the calcining duration.

In a third aspect, an embodiment of the present invention provides a lithium cobalt oxide obtained by mixing and sintering the tricobalt tetraoxide obtained in any one of the above embodiments with a lithium source.

In an alternative embodiment, the lithium source comprises at least one of lithium carbonate and lithium hydroxide.

In a fourth aspect, an embodiment of the present invention provides a cathode sheet comprising the lithium cobalt oxide according to the third aspect.

In the fifth aspect, a battery is prepared by using the cathode sheet according to the fourth aspect.

An embodiment of the present invention further provides a lithium battery comprising the above cathode sheet, which may further comprise an anode sheet, an electrolyte solution, a separator, etc., so as to form a complete battery structure.

The features and performances herein are further described in detail below in conjunction with the examples.

The tests herein were as follows.

(1) X-ray diffraction (XRD): XRD tests were performed on the prepared cobalt carbonate and tricobalt tetraoxide by using an energy-dispersive X-ray diffractometer. The Cu K$\alpha$ ray used during the tests had a wavelength $\lambda$ of 1.54056 Å, a scanning angle of 10°-68°, and a scanning speed of 3°/min. The XRD test results were analyzed using Jade 6 software, subjected to full spectrum fitting, with refinement $R_{wp} \leq 9\%$ ($R_{wp}$ is weighted graph residual variance factor, which can ensure the refinement accuracy). Diffraction peak with a full width at half maximum greater than 3° was an amorphous peak, and diffraction peak with a full width at half maximum less than 3° was a crystalline peak. The crystallinity of the cobalt carbonate was calculated as follows: a sum of peak areas of all crystalline peaks/a total area of all peaks $\times$ 100%. The grain size corresponding to the crystal plane (111) of the tricobalt tetraoxide was calculated from diffraction angle ($\theta$) and the full width at half maximum of the diffraction peak ($\beta$) of the crystal plane (111) according to the Scherrer formula: $D = \dfrac{k\lambda}{\beta \times cos\theta}$; wherein k is a constant value with the value of 0.9; and $\lambda$ refers to a wavelength of incident light. When the grain size was calculated with this formula, the full width at half maximum of the diffraction peak ($\beta$) was converted to radians for calculation.

(2) Particle size and distribution: The particle size and distribution of the prepared cobalt carbonate and tricobalt tetraoxide were tested by using a Malvern 3000 laser particle size analyzer.

(3) Scanning electron microscopy (SEM): The surface morphology of the tricobalt tetraoxide was observed and analyzed by using a field emission scanning electron microscopy.

(4) Change rate of Particle size Dv50 ($\Delta D\%$): Testing was performed by using a powder compaction density meter, and the compressive strength of the material particles was evaluated by the change rate of the particle size Dv50 ($\Delta D\%$), $\Delta D\% = (Dv50 - Dv50') / Dv50 \times 100\%$, wherein the Dv50 and the Dv50' are the median particle sizes of the material particles before and after being pressed, respectively, and a pressing pressure is 7,500 N.

(5) Charge-discharge test: Lithium cobalt oxide was used as the cathode material to assemble a button battery for charge-discharge test at a test temperature of 25°C, a voltage range of 3.0 V-4.50 V, and a rate of 0.1 C. Specifically, the assembly of the button battery comprises the following steps: (1) preparation of the lithium cobalt oxide: Tricobalt tetraoxide and lithium carbonate were mixed at a ratio of n(Co):n(Li) of 1:1.05, ground, dried, calcined at 1,050°C for 30 h, crushed, and sieved to obtain the lithium cobalt oxide; (2) preparation of a cathode sheet: a uniform slurry was formulated according to a mass ratio of lithium cobalt oxide:acetylene black:PVDF of 75:15:10, and coated evenly onto an aluminum foil substrate and dried; and (3) battery assembly: 1 mol/L LiPF$_6$ dissolved in a mixed solvent of ethylene carbonate (EC) and dimethyl carbonate (DMC) at a volume ratio of 1:1 was used as an electrolyte solution, and graphite was used as an anode; the cathode, the anode, the electrolyte solution, and a separator were assembled into a battery in a glove box under the protection of argon.

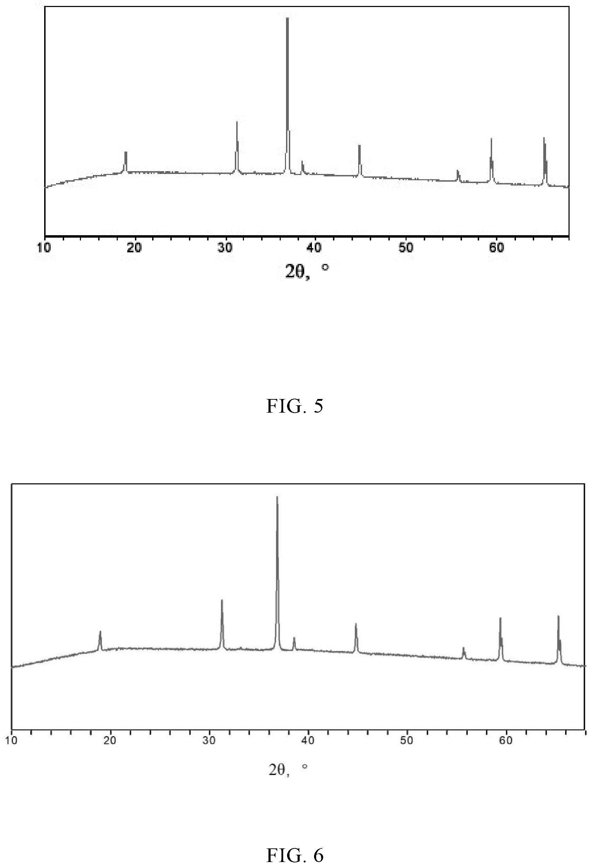

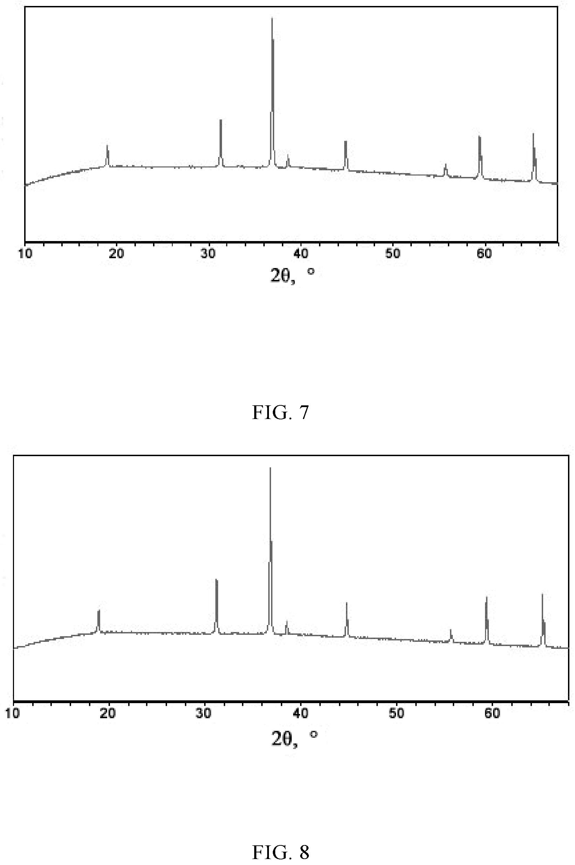

XRD spectra of the tricobalt tetraoxide prepared in Example 1, Example 6, and Comparative Examples 1 and 2 of the present invention were shown in FIGs. 5-8. It could be seen from the figures that the tricobalt tetraoxide was successfully prepared in the examples of the present invention, and the grain size of the crystal plane (111) in the XRD spectrum could be calculated according to the diffraction angle and full width at half maximum of the crystal plane.

Example 1

A method for preparing tricobalt tetraoxide comprised the following steps:

(1) 100 L of a sodium carbonate solution with a concentration of 1.5 mol/L was added into a reaction kettle as a base liquid, a cobalt chloride solution with a concentration of 2.0 mol/L and a sodium carbonate solution with a concentration of 1.5 mol/L were added in parallel into the reaction kettle at a flow rate of 20 L/h and 30 L/h, respectively; at the same time, stirring was started and adjusted to a speed of 300 rpm, and a temperature was adjusted to 40°C for reaction. The adding and stirring were stopped when a resulting material in the reaction kettle reached an upper limit, and standing was allowed until the material was completely settled. Supernatant equivalent to half a chamber volume of the reaction kettle was pumped away. Then the above cobalt chloride solution and sodium carbonate solution were added in parallel continually and stirring was restarted for reaction. The above operations of standing, pumping away part of the supernatant, and adding were repeated for 8 times to obtain cobalt carbonate with a median particle size Dv50 of 4.0 $\mu$m. The cobalt carbonate was transferred to a centrifuge for filtration and washed with pure water for 3 times to obtain a filter cake. The crystallinity of a resulting cobalt carbonate sample was 54.62% as tested by XRD.

(2) The filter cake obtained in step (1) was fed into a flash dryer for drying and sintering to obtain a pre-sintered cobalt carbonate, wherein the flash dryer had an air inlet temperature of 300°C, an air outlet temperature of 150°C, a main drive rotation speed of 20 Hz, and a feeding frequency of 10 Hz.

(3) The pre-sintered cobalt carbonate obtained in step (2) was fed into a rotary kiln for calcination to obtain the tricobalt tetraoxide, with a feeding frequency set to 3 Hz, a furnace tube rotation frequency to 12 Hz, a material residence time in the furnace tube to 3 h, and a calcining temperature to 710°C.

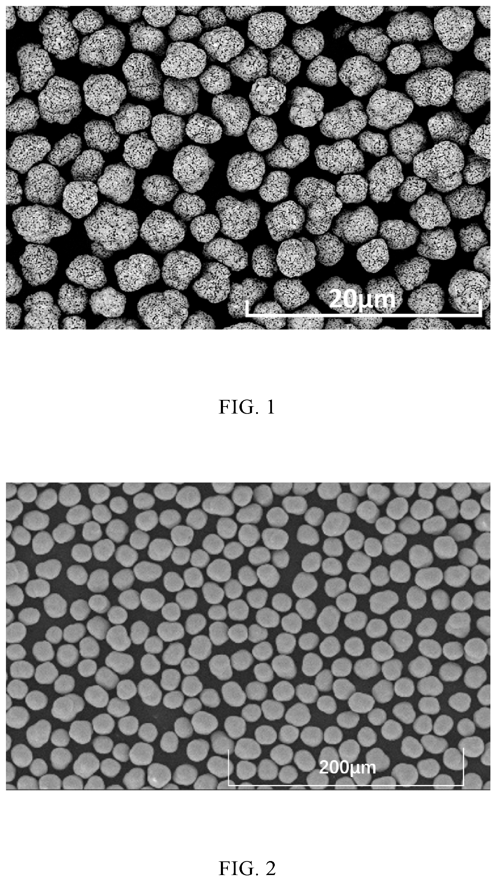

FIG. 1 showed the tricobalt tetraoxide prepared in Example 1. As could be seen from the figure, the tricobalt tetraoxide particles had good dispersibility, uniform primary particle size, and a narrow particle size distribution.

Example 2

A method for preparing tricobalt tetraoxide comprised the following steps:

(1) 200 L of an ammonium bicarbonate solution with a concentration of 2.0 mol/L was added into a reaction kettle as a base liquid, a cobalt sulfate solution with a concentration of 2.5 mol/L and an ammonium bicarbonate solution with a concentration of 2.0 mol/L were added in parallel into the reaction kettle at a flow rate of 25 L/h and 30 L/h respectively;

at the same time, stirring was started and adjusted to a speed of 200 rpm, and a temperature was adjusted to 48°C for reaction. The adding and stirring were stopped when a resulting material in the reaction kettle reached an upper limit, and standing was allowed until the material was completely settled. Supernatant equivalent to half a chamber volume of the reaction kettle was pumped away. Then the above cobalt sulfate solution and ammonium bicarbonate solution were added in parallel continually and stirring was restarted for reaction. The above operations of standing, pumping away part of the supernatant, and adding were repeated for 12 times to obtain cobalt carbonate with a median particle size Dv50 of 6.2 $\mu$m. The cobalt carbonate was transferred to a centrifuge for filtration and washed with pure water for 3 times to obtain a filter cake. The crystallinity of a resulting cobalt carbonate sample was 64.85% as tested by XRD.

(2) The filter cake obtained in step (1) was fed into a flash dryer for drying and sintering to obtain a pre-sintered cobalt carbonate, wherein the flash dryer had an air inlet temperature of 400°C, an air outlet temperature of 180°C, a main drive rotation speed of 30 Hz, and a feeding frequency of 20 Hz.

(3) The pre-sintered cobalt carbonate obtained in step (2) was fed into a rotary kiln for calcination to obtain the tricobalt tetraoxide, with a feeding frequency set to 9 Hz, a furnace tube rotation frequency to 15 Hz, a material residence time in the furnace tube to 5 h, and a calcining temperature to 730°C.

Example 3

(1) 120 L of a potassium carbonate solution with a concentration of 3 mol/L was added into a reaction kettle as a base liquid, a cobalt sulfate solution with a concentration of 2.2 mol/L and a potassium carbonate solution with a concentration of 3 mol/L were added in parallel into the reaction kettle at a flow rate of 40 L/h and 20 L/h respectively; at the same time, stirring was started and adjusted to a speed of 260 rpm, and a temperature was adjusted to 55°C for reaction. The adding and stirring were stopped when a resulting material in the reaction kettle reached an upper limit, and standing was allowed until the material was completely settled. Supernatant equivalent to half a chamber volume of the reaction kettle was pumped away. Then the above cobalt sulfate solution and potassium carbonate solution were added in parallel continually and stirring was restarted for reaction. The above operations of standing, pumping away part of the supernatant, and adding were repeated for 13 times to obtain cobalt carbonate with a median particle size Dv50 of 6.9 $\mu$m. The cobalt carbonate was transferred to a centrifuge for filtration and washed with pure water for 3 times to obtain a filter cake. The crystallinity of a resulting cobalt carbonate sample was 76.63% as tested by XRD.

(2) The filter cake obtained in step (1) was fed into a flash dryer for drying and sintering to obtain a pre-sintered cobalt carbonate, wherein the flash dryer had an air inlet temperature of 380°C, an air outlet temperature of 170°C, a main drive rotation speed of 26 Hz, and a feeding frequency of 12 Hz.

(3) The pre-sintered cobalt carbonate obtained in step (2) was fed into a rotary kiln for calcination to obtain the tricobalt tetraoxide, with a feeding frequency set to 5 Hz, a furnace tube rotation frequency to 12 Hz, a material residence time in the furnace tube to 3.5 h, and a calcining temperature to 720°C.

Example 4

(1) 160 L of a sodium bicarbonate solution with a concentration of 2.6 mol/L was added into a reaction kettle as a base liquid, a cobalt nitrate solution with a concentration of 2.3 mol/L and a sodium bicarbonate solution with a concentration of 2.6 mol/L were added in parallel into the reaction kettle at a flow rate of 30 L/h and 28 L/h respectively; at the same time, stirring was started and adjusted to a speed of 220 rpm, and a temperature was adjusted to 43°C for reaction. The adding and stirring were stopped when a resulting material in the reaction kettle reached an upper limit, and standing was allowed until the material was completely settled. Supernatant equivalent to half a chamber volume of the reaction kettle was pumped away. Then the above cobalt nitrate solution and sodium bicarbonate solution were added in parallel continually and stirring was restarted for reaction. The above operations of standing, pumping away part of the supernatant, and adding were repeated for 9 times to obtain cobalt carbonate with a median particle size Dv50 of 4.2 $\mu$m. The cobalt carbonate was transferred to a centrifuge for filtration and washed with pure water for 3 times to obtain a filter cake. The crystallinity of a resulting cobalt carbonate sample was 58.71% as tested by XRD.

Steps (2)-(3) were the same as those in Example 1.

Example 5

The differences from Example 1 were that in step (3), a feeding frequency was set to 9 Hz, a furnace tube rotation frequency was set to 15 Hz, a material residence time in the furnace tube was set to 5 h, and a calcining temperature was set to 730°C.

Example 6

(1) 100 L of a sodium carbonate solution with a concentration of 1.5 mol/L was added into a reaction kettle as a base liquid, a cobalt chloride solution with a concentration of 2.0 mol/L and a sodium carbonate solution with a concentration of 1.5 mol/L were added in parallel into the reaction kettle at a flow rate of 20 L/h and 30 L/h respectively; at the same time, stirring was started and adjusted to a speed of 200 rpm, and a temperature was adjusted to 40°C for reaction. The adding and stirring were stopped when a resulting material in the reaction kettle reached an upper limit, and standing was allowed until the material was completely settled. Supernatant equivalent to half a chamber volume of the reaction kettle was pumped away. Then the above cobalt chloride solution and sodium carbonate solution were added in parallel continually and stirring was restarted for reaction. The above operations of standing, pumping away part of the supernatant, and adding were repeated for 20 times to obtain cobalt carbonate with a median particle size Dv50 of 18.8 $\mu$m. The cobalt carbonate was transferred to a centrifuge for filtration and washed with pure water for 3 times to obtain a filter cake. The crystallinity of a resulting cobalt carbonate sample was 30% as tested by XRD.

(2) The filter cake obtained in step (1) was fed into a flash dryer for drying and sintering to obtain a pre-sintered cobalt carbonate, wherein the flash dryer had an air inlet temperature of 360°C, an air outlet temperature of 150°C, a main drive rotation speed of 22 Hz, and a feeding frequency of 13 Hz.

(3) The pre-sintered cobalt carbonate obtained in step (2) was fed into a rotary kiln for calcination to obtain a tricobalt tetraoxide, with a feeding frequency set to 3 Hz, a furnace tube rotation frequency to 12 Hz, a material residence time in the furnace tube to 3 h, and a calcining temperature to 740°C.

FIG. 2 showed the tricobalt tetraoxide prepared in Example 6. As could be seen from the figure, the tricobalt tetraoxide particles had good dispersibility, uniform primary particle size, and a narrow particle size distribution.

Example 7

(1) 100 L of a sodium carbonate solution with a concentration of 1.5 mol/L was added into a reaction kettle as a base liquid, a cobalt chloride solution with a concentration of 2.0 mol/L and a sodium carbonate solution with a concentration of 1.5 mol/L were added in parallel into the reaction kettle at a flow rate of 20 L/h and 30 L/h respectively; at the same time, stirring was started and adjusted to a speed of 200 rpm, and a temperature was adjusted to 45°C for reaction. The adding and stirring were stopped when a resulting material in the reaction kettle reached an upper limit, and standing was allowed until the material was completely settled. Supernatant equivalent to half a chamber volume of the reaction kettle was pumped away. Then the above cobalt chloride solution and sodium carbonate solution were added in parallel continually and stirring was restarted for reaction. The above operations of standing, pumping away part of the supernatant, and adding were repeated for 22 times to obtain cobalt carbonate with a median particle size Dv50 of 21.0 $\mu$m. The cobalt carbonate was transferred to a centrifuge for filtration and washed with pure water for 3 times to obtain a filter cake. The crystallinity of a resulting cobalt carbonate sample was 45% as tested by XRD.
Step (2) was the same as that in Example 6.

(3) The pre-sintered cobalt carbonate obtained in step (2) was fed into a rotary kiln for calcination to obtain a tricobalt tetraoxide, with a feeding frequency set to 3 Hz, a furnace tube rotation frequency to 12 Hz, a material residence time in the furnace tube to 3 h, and a calcining temperature to 750°C.

Example 8

(1) 100 L of a sodium carbonate solution with a concentration of 1.5 mol/L was added into a reaction kettle as a base liquid, a cobalt chloride solution with a concentration of 2.0 mol/L and a sodium carbonate solution with a concentration of 1.5 mol/L were added in parallel into the reaction kettle at a flow rate of 20 L/h and 30 L/h respectively; at the same time, stirring was started and adjusted to a speed of 200 rpm, and a temperature was adjusted to 55°C for reaction. The adding and stirring were stopped when a resulting material in the reaction kettle reached an upper limit, and standing was allowed until the mixture was completely settled. Supernatant equivalent to half a chamber volume of the reaction kettle was pumped away. Then the above cobalt chloride solution and sodium carbonate solution were added in parallel continually and stirring was restarted for reaction. The above operations of standing, pumping away part of the supernatant, and adding were repeated for 24 times to obtain cobalt carbonate with a median particle size Dv50 of 22.0 μm. The cobalt carbonate was transferred to a centrifuge for filtration and washed with pure water for 3 times to obtain a filter cake. The crystallinity of a resulting cobalt carbonate sample was 60% as tested by XRD.
Step (2) was the same as that in Example 6.

(3) The pre-sintered cobalt carbonate obtained in step (2) was fed into a rotary kiln for calcination to obtain a tricobalt tetraoxide, with a feeding frequency set to 3 Hz, a furnace tube rotation frequency to 12 Hz, a material residence time in the furnace tube to 3 h, and a calcining temperature to 760°C.

Comparative Example 1

The differences from Example 1 were that in step (2), for the flash dryer, the air inlet temperature was set to 150°C, the air outlet temperature was set to 90°C, the main drive rotation speed was set to 20 Hz, and the feeding frequency was set to 10 Hz.

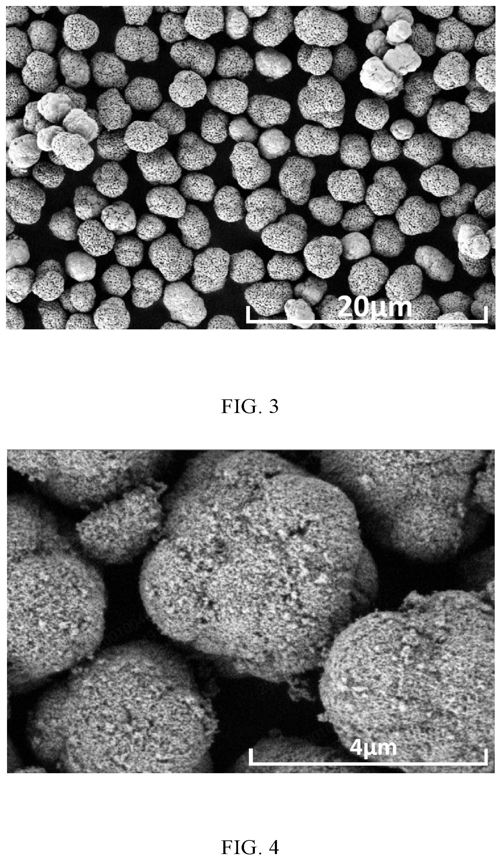

FIG. 3 showed the tricobalt tetraoxide prepared in Comparative Example 1. As could be seen from the figure, large agglomerates appeared in the sample, and the surface morphology of the agglomerates was different from that of the dispersed particles, indicating that the particles had undergone over-burning and fusion since the agglomerated particles had poor fluidity in the furnace tube and were heated unevenly.

Comparative Example 2

The difference from Example 1 was that the temperature for reaction in step (1) was 60°C, the obtained cobalt carbonate was cobalt carbonate with a median particle size Dv50 of 4.0 μm, and the crystallinity of the cobalt carbonate sample was 87.48% as tested by XRD.
FIG. 4 showed the tricobalt tetraoxide prepared in Comparative Example 2. As could be seen from the figure, the surface of the sample particles exhibited powder loss because the grain size of the crystal plane (111) was too small, which weakened the particle bonding force, resulting in deterioration of the surface structural stability of the material.

Comparative Example 3

(1) 170 L of a sodium bicarbonate solution with a concentration of 2.4 mol/L was added into a reaction kettle as a base liquid, a cobalt nitrate solution with a concentration of 2.3 mol/L and a sodium bicarbonate solution with a concentration of 2.4 mol/L were added in parallel into the reaction kettle at a flow rate of 29 L/h and 26 L/h respectively; at the same time, stirring was started and adjusted to a speed of 220 rpm, and a temperature was adjusted to 35°C for reaction. The adding and stirring were stopped when a resulting material in the reaction kettle reached an upper limit, and standing was allowed until the material was completely settled. Supernatant equivalent to half a chamber volume of the reaction kettle was pumped away. Then the above cobalt nitrate solution and sodium bicarbonate solution were added in parallel continually and stirring was restarted for reaction. The above operations of standing, pumping away part of the supernatant, and adding were repeated for 10 times to obtain cobalt carbonate with an average particle size of 4.2 μm. The cobalt carbonate was transferred to a centrifuge for filtration and washed with pure water for 3 times to obtain a filter cake. The crystallinity of a resulting cobalt carbonate sample was 43.61% as tested by XRD.

Steps (2)-(3) were the same as those in Example 1.

Comparative Example 4

The difference from Example 6 was that the temperature for reaction in step (1) was 60°C, and the crystallinity of a resulting cobalt carbonate sample was 90.7% as tested by XRD.

Comparative Example 5

The difference from Example 6 was that the temperature for reaction in step (1) was 33°C, and the crystallinity of a resulting cobalt carbonate sample was 25.6% as tested by XRD.

The physical parameters and performances of the tricobalt tetraoxide prepared in the examples and comparative examples of the present invention were shown in Table 1 and Table 2.

Table 1

| Sample | Dv50 (μm) | Grain size of crystal plane (111) (μm) | BET (m²/g) | $\frac{BET \times 10^{-12}}{Dv50 \times D(111)} \times [lg(Dv50)]^3 (g^{-1})$ | Span | ΔD% (%) |
|---|---|---|---|---|---|---|
| Example 1 | 3.1 | 0.0494 | 4.5 | 3.49 | 0.52 | 0.75 |
| Example 2 | 4.3 | 0.0460 | 5 | 6.43 | 0.63 | 1.17 |
| Example 3 | 3.8 | 0.0452 | 6.0 | 6.81 | 0.50 | 1.65 |
| Example 4 | 3.8 | 0.0486 | 4.7 | 4.96 | 0.70 | 1.01 |
| Example 5 | 3.3 | 0.0507 | 4.0 | 3.33 | 0.54 | 0.58 |
| Example 6 | 16.5 | 0.0660 | 2.5 | 4.14 | 0.43 | 0.66 |
| Example 7 | 16.8 | 0.0600 | 3.4 | 6.21 | 0.40 | 0.85 |
| Example 8 | 17.0 | 0.0580 | 3.6 | 6.80 | 0.38 | 1.06 |
| Comparative Example 1 | 3.7 | 0.0523 | 3.5 | 3.32 | 1.21 | 0.41 |
| Comparative Example 2 | 3.6 | 0.0424 | 6.2 | 6.99 | 0.74 | 33.3 |
| Comparative Example 3 | 3.9 | 0.0546 | 3.0 | 2.91 | 0.60 | 0.30 |
| Comparative Example 4 | 16.5 | 0.0540 | 5.6 | 11.34 | 0.39 | 57.8 |
| Comparative Example 5 | 16.8 | 0.0690 | 2.0 | 3.17 | 1.36 | 0.53 |

Table 2

| Sample | Initial charge specific capacity (mAh/g) | Initial discharge specific capacity (mAh/g) | Initial charge-discharge efficiency (%) |
|---|---|---|---|
| Example 1 | 205.1 | 188.7 | 92.0 |
| Example 2 | 204.1 | 189.8 | 93.0 |
| Example 3 | 205.3 | 190.1 | 92.6 |
| Example 4 | 204.3 | 188.2 | 92.1 |
| Example 5 | 205.2 | 189.4 | 92.3 |
| Example 6 | 208.6 | 192.1 | 92.1 |
| Example 7 | 207.9 | 193.6 | 93.1 |
| Example 8 | 209.1 | 194.2 | 92.8 |
| Comparative Example 1 | 194.8 | 175.5 | 90.1 |
| Comparative Example 2 | 197.6 | 175.1 | 88.6 |
| Comparative Example 3 | 195.1 | 173.6 | 89.0 |
| Comparative Example 4 | 203.6 | 181.6 | 89.2 |
| Comparative Example 5 | 202.9 | 179.4 | 88.4 |

From the data in the table, it could be seen that the tricobalt tetraoxide prepared in the comparative examples did not satisfy $3.33 \text{ g}^{-1} \leq \frac{BET \times 10^{-12}}{Dv50 \times D(111)} \times [lg(Dv50)]^3 \leq 6.90 \text{ g}^{-1}$, and the specific capacities of the lithium cobalt oxide prepared therefrom were worse than those of the examples, indicating that maintaining the numerical relationship among the BET, Dv50 and D(111) of the tricobalt tetraoxide at a reasonable level was conducive to obtaining the tricobalt tetraoxide with high mechanical properties and good electrochemical performances. Specifically, the $\frac{BET \times 10^{-12}}{Dv50 \times D(111)} \times [lg(Dv50)]^3$ of Comparative Examples 1, 3, and 5 was lower than 3.33 g$^{-1}$. Although the ΔD% of the obtained tricobalt tetraoxide was low (i.e., the mechanical properties were better), it was easy to cause uneven particle size distribution of the product. Therefore, distribution coefficients of Comparative Examples 1, 3, and 5 were large. Moreover, due to the small BET, the lithium diffusion efficiencies of the lithium cobalt oxide prepared therefrom were reduced, thereby reducing the specific capacities.

The $\frac{BET \times 10^{-12}}{Dv50 \times D(111)} \times [lg(Dv50)]^3$ of Comparative Examples 2 and 4 were higher than 6.90 g$^{-1}$, so their ΔD% were much greater than those of the examples. Due to the poor mechanical properties, the material was easily crushed and pulverized during the subsequent preparation of lithium cobalt oxide, resulting in an excessively wide particle size distribution of the obtained lithium cobalt oxide, thereby reducing the specific capacity.

In Example 2, [$Dv50 \times$ D(111)] = 0.1978 $\mu$m$^2$, and in Comparative Example 1, [$Dv50 \times$ D(111)] = 0.1935 $\mu$m$^2$. However, since the material particles of Example 2 had better dispersibility, they had a higher BET, and thus met

$$3.33 \text{ g}^{-1} \leq \frac{BET \times 10^{-12}}{Dv50 \times D(111)} \times [lg(Dv50)]^3 \leq 6.90 \text{ g}^{-1}$$, possessing both good mechanical strength and sintering activity. Consequently, the obtained cathode material had a large specific capacity, indicating that maintaining the numerical relationship among the BET, Dv50 and D(111) at a reasonable level was conducive to obtaining the tricobalt tetraoxide with high mechanical properties and good sintering activity.

Examples 1 and 4 and Comparative Examples 2 and 3 showed that by adjusting the process parameters for preparing the cobalt carbonate, cobalt carbonate with different crystallinity could be obtained. As could be seen from analysis of the data in Table 1, the cobalt carbonate with different crystallinity had an important impact on the grain size of the crystal plane (111) of the final product tricobalt tetraoxide. Specifically, the higher the crystallinity of cobalt carbonate, the smaller the grain size of the crystal plane (111) of the tricobalt tetraoxide; since when the crystallinity of the cobalt carbonate was high, it had a more regular crystal structure and lower interface energy, which was conducive to the formation of fine tricobalt tetraoxide grains during sintering, thereby reducing the grain size of the crystal plane (111).

Examples 1 and 5 showed that the calcination process conditions had an impact on the grain size of the crystal plane (111) of the tricobalt tetraoxide, since the higher the calcining temperature and the longer the calcining duration, the more sufficient the time and energy for grain growth and development, and the larger the grain size, and *vice versa*.

As could be seen from comparison of Example 1 and Comparative Example 1, the process conditions of flash drying had an impact on the particle size, degree of agglomeration, and the grain size of the crystal plane (111) of the tricobalt tetraoxide; since when the temperature of flash drying was low, there was only a drying effect, and the agglomeration and particle size of the cobalt carbonate were not changed; and when the temperature of flash drying was high, the cobalt carbonate underwent an oxidative decomposition reaction in addition to drying and dehydration. Further, since Comparative Example 1 had an agglomerated structure and its grain size of crystal plane (111) was higher than that of Example 1, its specific capacity was lower.

Example 9

(1) 138 L of an ammonium bicarbonate solution with a concentration of 2.4 mol/L was added into a reaction kettle as a base liquid, a cobalt nitrate solution with a concentration of 2.0 mol/L and an ammonium bicarbonate solution with a concentration of 2.4 mol/L were added in parallel into the reaction kettle at a flow rate of 20 L/h and 25 L/h respectively; at the same time, stirring was started and adjusted to a speed of 276 rpm, and a temperature was adjusted to 41°C for reaction. The adding and stirring were stopped when a resulting material in the reaction kettle reached an upper limit, and standing was allowed until the material was completely settled. Supernatant equivalent to half a chamber volume of the reaction kettle was pumped away. Then the above cobalt nitrate solution and ammonium bicarbonate solution were added in parallel continually and stirring was restarted for reaction. The above operations of standing, pumping away part of the supernatant, and adding were repeated for 10 times to obtain cobalt carbonate with a median particle size Dv50 of 7.8 $\mu$m. The cobalt carbonate was transferred to a centrifuge for filtration and washed with pure water for 3 times to obtain a filter cake. The crystallinity of a resulting cobalt carbonate sample was 57.1% as tested by XRD.

Steps (2)-(3) were the same as those in Example 3.

Example 10

(1) 124 L of a sodium bicarbonate solution with a concentration of 2.5 mol/L was added into a reaction kettle as a base liquid, a cobalt nitrate solution with a concentration of 2.2 mol/L and a sodium bicarbonate solution with a concentration of 2.5 mol/L were added in parallel into the reaction kettle at a flow rate of 35 L/h and 29 L/h respectively; at the same time, stirring was started and adjusted to a speed of 220 rpm, and a temperature was adjusted to 46°C for reaction. The adding and stirring were stopped when a resulting material in the reaction kettle reached an upper limit, and standing was allowed until the mixture was completely settled. Supernatant equivalent to half a chamber volume of the reaction kettle was pumped away. Then the above cobalt nitrate solution and sodium bicarbonate solution were added in parallel continually and stirring was restarted for reaction. The above operations of standing, pumping away part of the supernatant, and adding were repeated for 14 times to obtain cobalt carbonate with a median particle size Dv50 of 13.9 $\mu$m. The cobalt carbonate was transferred to a centrifuge for filtration and washed with pure water for 3 times to obtain a filter cake. The crystallinity of a resulting cobalt carbonate sample was 52.3% as tested by XRD.
Step (2) was the same as that in Example 6.

(3) The pre-sintered cobalt carbonate obtained in step (2) was fed into a rotary kiln for calcination to obtain a tricobalt tetraoxide, with a feeding frequency set to 6 Hz, a furnace tube rotation frequency to 14 Hz, a material residence time in the furnace tube to 3 h, and a calcining temperature to 740°C.

Example 11

(1) 136 L of an ammonium bicarbonate solution with a concentration of 1.2 mol/L was added into a reaction kettle as a base liquid, a cobalt chloride solution with a concentration of 2.0 mol/L and an ammonium bicarbonate with a concentration of 1.2 mol/L were added in parallel into the reaction kettle at a flow rate of 25 L/h and 23 L/h respectively; at the same time, stirring was started and adjusted to a speed of 240 rpm, and a temperature was adjusted to 51°C for reaction. The adding and stirring were stopped when a resulting material in the reaction kettle reached an upper limit, and standing was allowed until the material was completely settled. Supernatant equivalent to half a chamber volume of the reaction kettle was pumped away. Then the above cobalt chloride solution and ammonium bicarbonate solution were added in parallel continually and stirring was restarted for reaction. The above operations of standing, pumping away part of the supernatant, and adding were repeated for 21 times to obtain cobalt carbonate with a median particle size Dv50 of 21.9 $\mu$m. The cobalt carbonate was transferred to a centrifuge for filtration and washed with pure water for 3 times to obtain a filter cake. The crystallinity of a resulting cobalt carbonate sample was 65% as tested by XRD.
Step (2) was the same as that in Example 6.
(3) The pre-sintered cobalt carbonate obtained in step (2) was fed into a rotary kiln for calcination to obtain a tricobalt tetraoxide, with a feeding frequency set to 4 Hz, a furnace tube rotation frequency to 15 Hz, a material residence time in the furnace tube to 4.5 h, and a calcining temperature to 755°C.

The physical parameters of the tricobalt tetraoxide prepared in Examples 9-11 were shown in Table 3.

Table 3

| Sample | Dv50 ($\mu$m) | Grain size of crystal plane (111) ($\mu$m) | BET (m$^2$/g) | | Span | ΔD% (%) |
|---|---|---|---|---|---|---|
| Example 9 | 5.7 | 0.0510 | 4.5 | 6.69 | 0.82 | 1.54 |
| Example 10 | 12 | 0.0617 | 4 | 6.79 | 0.74 | 1.62 |
| Example 11 | 19.5 | 0.0674 | 3.5 | 5.72 | 0.42 | 0.92 |

As could be seen from the data in Table 3, the preparation method provided in the examples of the present invention could produce tricobalt tetraoxide with a Dv50 of 3 $\mu$m-20 $\mu$m and satisfying

$$3.33 \text{ g}^{-1} \le \frac{BET \times 10^{-12}}{Dv50 \times D(111)} \times [lg(Dv50)]^3 \le 6.90 \text{ g}^{-1}$$ , and the tricobalt tetraoxide had a lower particle size distribution coefficient and excellent mechanical properties.

**Claims**

1. A tricobalt tetraoxide, wherein a Dv50, a grain size D(111) of crystal plane (111), and a BET specific surface area of the tricobalt tetraoxide satisfy the following relationship:

   $$3.33 \text{ g}^{-1} \le \frac{BET \times 10^{-12}}{Dv50 \times D(111)} \times [lg(Dv50)]^3 \le 6.90 \text{ g}^{-1}$$ , wherein the Dv50 of the tricobalt tetraoxide is 3 $\mu$m-20 $\mu$m, the Dv50 refers to a particle size corresponding to a cumulative particle size distribution based on volume statistics of 50%, the BET is in a unit of $m^2/g$, and the D(111) is in a unit of $\mu$m.

2. The tricobalt tetraoxide according to claim 1, wherein the grain size D(111) of the crystal plane (111) of the tricobalt tetraoxide is 0.0450 $\mu$m-0.0510 $\mu$m or 0.0560 $\mu$m-0.0680 $\mu$m; and/or,

   the BET specific surface area of the tricobalt tetraoxide is 2 $m^2/g$-6.5 $m^2/g$; and/or,
   a particle size distribution coefficient Span of the tricobalt tetraoxide is less than 1, wherein Span = (Dv90 - Dv10)/Dv50, and the Dv10, Dv50, and Dv90 refer to particle sizes at which cumulative particle size distributions based on volume statistics reaches 10%, 50% and 90%, respectively; and/or,
   a Dv50 change rate $\Delta$D% of the tricobalt tetraoxide after being pressed at 7,500 N relative to the tricobalt tetraoxide before being pressed is less than 2.0%.

3. The tricobalt tetraoxide according to claim 1 or 2, wherein the grain size D(111) of the crystal plane (111) of the tricobalt tetraoxide is 0.0450 $\mu$m-0.0510 $\mu$m, and the median particle size Dv50 of the tricobalt tetraoxide is 3 $\mu$m-6 $\mu$m.

4. A method for preparing the tricobalt tetraoxide according to any one of claims 1 to 3, wherein the tricobalt tetraoxide is obtained by pre-sintering and calcining cobalt carbonate with a crystallinity of 30%-80% and a median particle size Dv50 of 3 $\mu$m-22 $\mu$m.

5. The method for preparing the tricobalt tetraoxide according to claim 4, wherein a method for preparing the cobalt carbonate is as follows: adding a cobalt salt solution and a precipitant solution into a reaction kettle containing a base liquid in parallel, starting stirring for reaction, stopping the adding and the stirring when a resulting material in the reaction kettle reaches an upper limit, standing a reaction product until the material settles, pumping away part of supernatant, repeating the above operations of adding, stirring, standing, and pumping away part of the supernatant until an obtained cobalt carbonate reaches a target particle size, conducting solid-liquid separation and then washing a resulting solid.

6. The method for preparing the tricobalt tetraoxide according to claim 5, wherein the method for preparing the cobalt carbonate further comprises at least one of the following features:

   feature 1: a cobalt salt in the cobalt salt solution is at least one of cobalt chloride, cobalt sulfate, and cobalt nitrate, and the cobalt salt solution has a concentration of 2.0 mol/L-2.5 mol/L;
   feature 2: a precipitant in the precipitant solution is at least one of sodium carbonate, sodium bicarbonate, ammonium bicarbonate, and potassium carbonate, and the precipitant solution has a concentration of 1.0 mol/L-3.0 mol/L;
   feature 3: the cobalt salt solution is added at a flow rate of 20 L/h-40 L/h, and the precipitant solution is added at a flow rate of 20 L/h-30 L/h;
   feature 4: the base liquid is the precipitant solution;
   feature 5: a speed of the stirring is 200 rpm-300 rpm, and a temperature for the reaction is 40°C-55°C;
   feature 6: the pumping away part of the supernatant refers to pumping away the supernatant equivalent to half a chamber volume of the reaction kettle; and
   feature 7: the target particle size refers to that the median particle size Dv50 of the cobalt carbonate is 3 $\mu$m-22 $\mu$m.

7. The method for preparing the tricobalt tetraoxide according to claim 4, wherein the pre-sintering is performed using a flash dryer; the flash dryer has an air inlet temperature of 300°C-400°C, an air outlet temperature of 150°C-180°C, a main drive rotation speed of 20 Hz-30 Hz, and a feeding frequency of 10 Hz-20 Hz; and/or,

the calcining is performed in a rotary kiln; the rotary kiln has a feeding frequency of 3 Hz-9 Hz, a furnace tube rotation frequency of 12 Hz-15 Hz, and a temperature of 710°C-760°C; the calcining is performed for 3 h-5 h.

8. A lithium cobalt oxide obtained by mixing and sintering the tricobalt tetraoxide according to any one of claims 1 to 3 with a lithium source.

9. A cathode sheet, comprising the lithium cobalt oxide according to claim 8.

10. A battery, comprising the cathode sheet according to claim 9.

FIG. 1

FIG. 2

FIG. 3

FIG. 4

FIG. 5

FIG. 6

FIG. 7

FIG. 8

# EP 4 768 441 A1

## INTERNATIONAL SEARCH REPORT

| International application No. |
| --- |
| **PCT/CN2025/111924** |

| A. | CLASSIFICATION OF SUBJECT MATTER |
| --- | --- |

C01G 51/04(2025.01)i; C01G 51/06(2006.01)i; C01G 51/00(2025.01)i; H01M 4/525(2010.01)i; H01M 4/131(2010.01)i; H01M 10/052(2010.01)i

According to International Patent Classification (IPC) or to both national classification and IPC

| B. | FIELDS SEARCHED |
| --- | --- |

Minimum documentation searched (classification system followed by classification symbols)

IPC: C01G 51/-, H01M 4/-, H01M 10/-

Documentation searched other than minimum documentation to the extent that such documents are included in the fields searched

Electronic data base consulted during the international search (name of data base and, where practicable, search terms used)

CNTXT, ENTXTC, ENTXT, VEN, CNKI, WEB OF SCIENCE: 四氧化三钴, Co3O4, 氧化高钴, 钴黑, 碳酸钴, 比表面积, BET, 尺寸, 晶粒, 晶面, 粒度, 粒径, 结晶度, 正极, 电池, 钴酸锂, tricobalt tetroxide, cobalt black, cobalt carbonate, specific surface area, size, grain, crystal plane, crystallinity, positive electrode, battery, lithium cobalt oxide

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 119118214 A (GUANGDONG BRUNP RECYCLING TECHNOLOGY CO., LTD. et al.) 13 December 2024 (2024-12-13) claims 1-10 | 1-10 |
| A | CN 117735620 A (HUNAN ZOOMWE NEW ENERGY TECHNOLOGY CO., LTD. et al.) 22 March 2024 (2024-03-22) description, paragraphs [0005]-[0039] | 1-10 |
| A | CN 117401724 A (QUZHOU HUAYOU COBALT NEW MATERIAL CO., LTD. et al.) 16 January 2024 (2024-01-16) entire document | 1-10 |
| A | WO 2022127129 A1 (BASF SHANSHAN BATTERY MATERIALS CO., LTD.) 23 June 2022 (2022-06-23) entire document | 1-10 |
| A | JP 2004010375 A (NIPPON CHEM INDUSTRIAL CO., LTD.) 15 January 2004 (2004-01-15) entire document | 1-10 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **05 November 2025** | **11 November 2025** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2025/111924**

| Patent document cited in search report | | | Publication date (day/month/year) | Patent family member(s) | | | Publication date (day/month/year) |
|---|---|---|---|---|---|---|---|
| CN | 119118214 | A | 13 December 2024 | None | | | |
| CN | 117735620 | A | 22 March 2024 | None | | | |
| CN | 117401724 | A | 16 January 2024 | None | | | |
| WO | 2022127129 | A1 | 23 June 2022 | None | | | |
| JP | 2004010375 | A | 15 January 2004 | JP | 4086551 | B2 | 14 May 2008 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2024115875512